**Europäisches Patentamt**

**European Patent Office**

**Office européen des brevets**

(19)

(11) Veröffentlichungsnummer: **0 334 081 B1**

(12) # EUROPÄISCHE PATENTSCHRIFT

(45) Veröffentlichungstag der Patentschrift:
29.05.91 Patentblatt 91/22

(51) Int. Cl.⁵: **B60G 7/02, F16F 1/38**

(21) Anmeldenummer: **89103814.3**

(22) Anmeldetag: **04.03.89**

(54) Elastisches Gelenk.

(30) Priorität: **09.03.88 DE 3807644**

(43) Veröffentlichungstag der Anmeldung:
**27.09.89 Patentblatt 89/39**

(45) Bekanntmachung des Hinweises auf die
Patenterteilung:
**29.05.91 Patentblatt 91/22**

(84) Benannte Vertragsstaaten:
**DE ES FR GB IT NL SE**

(56) Entgegenhaltungen:
**BE-A- 840 111
DE-A- 2 816 742
FR-A- 2 333 163
GB-A- 1 020 799**

(73) Patentinhaber: **Jörn GmbH
Porschestrasse 10
W-7012 Fellbach (DE)**

(72) Erfinder: **Zawadzki, Bernd, Dipl.-Ing.
Talstrasse 14
W-7054 Korb (DE)**
Erfinder: **Walz, Georg, Dipl.-Ing.
Baumschulweg 1
W-7911 Pfaffenhofen (DE)**

(74) Vertreter: **Neubauer, Hans-Jürgen, Dipl.-Phys.
Fauststrasse 30
W-8070 Ingolstadt (DE)**

## Beschreibung

Die Erfindung betrifft ein elastisches Gelenk, insbesondere zur Befestigung einer Achse an einem Dreieckslenker, der seinerseits mit dem Rahmen eines Lastkraftwagens verbunden ist.

Elastische Gelenke mit einem inneren Metallteil zur Krafteinleitung und mit einem äußeren Metallteil zur Kraftausleitung sowie mit zwischen dem inneren und äußeren Metallteil festhaftend einvulkanisierten Gummiteilen sind in einer Vielzahl von Ausführungsformen bekannt (beispielsweise DE-A-28 16 742). Zur Komplettierung des Gelenks werden die äußeren Metallteile unter radialer Vorspannung des Gummis in ein Aufnahmeauge mit symmetrischem Querschnitt eingepreßt.

Bei der Lagerung des Scheitelpunkts eines Dreieckslenkers zur Verbindung einer Achse mit einem Fahrzeugrahmen können an sich bekannte Kugelgelenke mit Gummizwischenlagen verwendet werden. Kugelgelenke mit der dafür erforderlichen Dimensionierung bauen aber relativ hoch, wofür der Platz bei solchen Anordnungen meist nicht ausreichend vorhanden ist. Zudem soll ein solches Lager in Fahrzeuglängsrichtung relativ hart sein und in der Fahrzeugquerrichtung weicher ausgeführt sein. Dies ist mit einem in allen Richtungen im wesentlichen gleich wirkenden Kugelgelenk nicht zu realisieren.

Eine weitere Möglichkeit für eine relativ harte Lagerung und Abstützung in der Fahrzeuglängsrichtung könnte darin bestehen, daß ein sogenanntes Parallelschublager verwendet wird. Ein solches Parallelschublager, von dem auch bei der Gattungsbildung ausgegangen wird, besteht aus einem inneren Metallteil zur Krafteinleitung und aus zwei am inneren Metallteil gegenüberliegend angeordneten, äußeren Metallteilen zur Kraftausleitung. Zwischen dem inneren Metallteil und den äußeren Metallteilen liegen festhaftend einvulkanisierte Gummischichten, wobei die Haftflächen bzw. die Gummischichten selbst plan in einer Ebene parallel und symmetrisch gegenüberliegen. Im vorliegenden Fall wäre ein solches Parallelschublager so einzusetzen, daß die Gummischichten in senkrechten Fahrzeugquerebenen liegen. Da aber das Lager aufgrund der Dreieckslenkeranordnung eine kardanische Bewegung, insbesondere eine Drehbewegung in einer vertikalen Längsebene, aufnehmen muß, würden bei einer Anordnung mit planen Gummischichten diese in ihrem Randbereich einerseits zu stark zusammengepreßt und andererseits evtl. auch zu stark gedehnt und überlastet. Dadurch wäre die, aufgrund der Anwendung notwendige, Verdrehbewegung von ca. +/−30° praktisch nicht durchführbar, bzw. nur mit so dicken Gummipaketen, daß die geforderte straffe Längsführung nicht realisiert werden könnte.

Es ist auch ein Torsionslager bekannt (DE-A-29 18 717), das insgesamt rotationssymmetrisch um eine Lagerachse ausgeführt ist mit einem inneren, festen Teil, einem äußeren, festen Teil und dazwischenliegender Gleitschicht aus elastomerem Material. Das innere, feste Teil ist dabei ballig ausgeführt mit einer insgesamt in der Gelenkachse gestreckten Form. Die Federkonstante ist hier in jeder Querrichtung zur Gelenkachse etwa gleich groß. Zudem verdrehen sich die Lagerteile bei einer entsprechend großen Torsionskraft, wobei in die Gleitflächen Schmutzpartikel eindringen können. Ein solches Lager ist offensichtlich für die Befestigung einer Achse an einem Dreieckslenker bei einem Lastkraftwagen ungeeignet.

Aufgabe der Erfindung ist es demgegenüber, ein elastisches Gelenk zu schaffen, das ohne Überlastung der verwendeten Bauteile eine gewisse kardanische Auslenkung aufnehmen kann und das zudem eine relativ geringe Bauhöhe aufweist.

Diese Aufgabe wird bei einem gattungsgemäßen Gelenk mit den kennzeichnenden Merkmalen des Anspruchs 1 gelöst.

Gemäß Anspruch 1 sind bei einem gattungsgemäßen Lager die Außenflächen des inneren Metallteils und die entsprechenden Innenflächen der äußeren Metallteile bzw. die dazwischenliegenden Gummischichten nach außen zum Aufnahmeauge hin gewölbt, wobei die Gummischichten aber in der Richtung und symmetrisch zu einer ersten Mittenlängsebene durch die Gelenkachse verlaufen. Diese Außenflächen und Innenflächen sind so gewölbt, daß sie konzentrisch liegenden Zylinderteilflächen von Zylinderbögen entsprechen. Deren gemeinsame Zylinderachse liegt jedoch nicht im Gelenkmittelpunkt, so daß die Gesamtanordnung bzw. das innere Metallteil insgesamt nicht zylindrisch ist ; die Zylinderachse liegt dagegen quer zur Gelenkachse und in einer Richtung zum jeweils gegenüberliegenden Metallteil hin versetzt.

Damit wird erreicht, daß das Gelenk eine kardanische Auslenkung und insbesondere eine Verdrehung in einer Ebene durch die Lagerachse aufnehmen und abstützen kann, ohne daß Lagerteile, insbesondere Gummischichten, in ihren Randbereichen überlastet werden. Zudem baut das Lager relativ niedrig. Das Lager ist bei entsprechendem Einbau in Fahrzeuglängsrichtung relativ hart und in Fahrzeugquerrichtung weicher ausführbar.

Da die Gummischichten gemäß der Ausführung nach Anspruch 1 in einer Richtung parallel verlaufen, kann das Gelenkinnenteil kastenförmig aufgebaut sein und entsprechend in ein Gehäuse mit rechteckigem oder quadratischen Querschnitt eingepreßt werden. Aus fertigungstechnischen und Kostengründen ist es allerdings günstiger, ein zylindrisches Aufnahmeauge zu verwenden, wozu mit den Merkmalen des Anspruchs 2 eine entsprechende Ausgestaltung der Außenflächen der äußeren Metallteile vorgeschlagen wird.

Um eine Abstützung auch in einer Querrichtung zu den äußeren Metallteilen zu erhalten, werden nach Anspruch 3 entsprechende Gummipuffer am inneren Metallteil angeformt. Diese Gummipuffer liegen beim Einpressen entweder direkt am Aufnahmeauge an oder haben, je nach Anwendungsfall, einen Freigang bis zur Anlage. Diese Gummipuffer sind insbesondere bei der Verwendung des elastischen Gelenks zur Lagerung des o.g. Dreieckslenkers erheblich weicher dimensioniert als die in Fahrtrichtung wirkenden Gummischichten. Nach Anspruch 4 kann es dazu zweckmäßig sein, den Gummipuffer mit einem äußeren Metallteil und ggf. mit einem oder mehreren Zwischenblechen zu versehen.

Bei der mit Anspruch 5 angegebenen Verwendung des elastischen Gelenks zur Achshalterung am Scheitelpunkt eines Dreieckslenkers wird eine straffe Führung und Anbindung in der Fahrzeuglängsrichtung und eine gewünscht weiche Führung in Fahrzeugquerrichtung über die Anschlagpuffer erreicht. Zudem kann die über den Dreieckslenker ins Lager eingebrachte Drehbewegung wegen der gewölbten Haftflächen für die Gummischichten im Gelenk gut und ohne Überlastung aufgenommen werden.

Anspruch 6 gibt bei vorgegebenen Randbedingungen eine Anweisung für die Dimensionierung bzw. für die Wahl der Radien der gewölbten Haftflächen bzw. Gummischichten an. Bei der maximal ins Gelenk eingeleiteten Verdrehung soll die maximale Verformung der Gummischichten in den Randbereichen höchstens 50% betragen. Dadurch wird sichergestellt, daß insbesondere der Gummi nicht überlastet wird.

Mit Anspruch 7 ist eine weitere Dimensionierungsvorschrift angegeben, mit der auch üblicherweise die vorstehende Forderung nach einer weniger als 50%igen Verformung des Gummis in den Randbereichen erreicht werden kann. Die Haftflächenkrümmungen am inneren Metallteil liegen dabei zwischen den Extremen einer jeweils planen Ausbildung als Parallelschublager und einer insgesamt zylindrischen Ausbildung mit der Zylinderachse in der Gelenkachse.

Um das Lager im Bereich der anvulkanisierten Gummiteile härter und starrer zu machen, wird mit Anspruch 8 das an sich bekannte Einvulkanisieren von Zwischenblechen vorgeschlagen. Diese Zwischenbleche sollen aber hier ebenfalls die entsprechende Krümmung der Gummiteile aufweisen.

Zum Einbau des Gelenks ist es vorteilhaft, das innere Metallteil nach Anspruch 9 mit einer Bohrung, bevorzugt einer konischen Bohrung zu versehen, wodurch das Gelenk auf einen senkrecht stehenden Bolzen aufgesetzt werden kann.

Um die in das Lagerauge eingepreßten Teile gegen ein Herausreißen zu sichern, wird nach Anspruch 10 ein oberer Rand des Aufnahmeauges um das äußere Metallteil gebördelt und zur Erhöhung der Reibung zwischen dem Aufnahmeauge und dem äußeren Metallteil wird dort eine an sich bekannte, dünne Gummiauflage angebracht.

Anhand einer Zeichnung werden zwei Ausführungsbeispiele der Erfindung mit weiteren Einzelheiten, Merkmalen und Vorteilen näher erläutert.

Es zeigen

Fig. 1 die schematische Darstellung eines Dreieckslenkers mit einem Befestigungspunkt für ein elastisches Gelenk,

Fig. 2 eine Seitenansicht mit teilweisem Schnitt eines Lagerelements (nicht in das Aufnahmeauge eingepreßt),

Fig. 3 eine um 90° versetzte Seitenansicht der Darstellung nach Fig. 2,

Fig. 4 eine Draufsicht mit halbseitigem Querschnitt der Ausführungsform nach Fig. 2 und Fig. 3,

Fig. 5 eine Darstellung gemäß Fig. 4, wobei das Lagerelement in ein Aufnahmeauge eingepreßt ist,

Fig. 6 ein Längsschnitt nach Fig. 5, wobei der obere und untere Teil um 90° verdreht dargestellt sind.

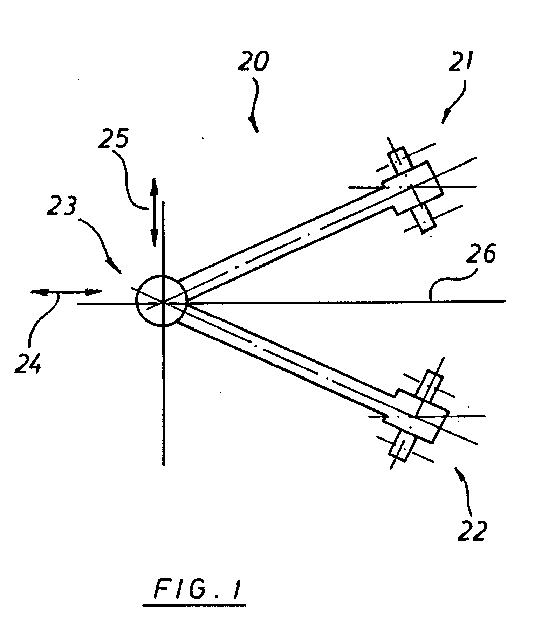

In Fig. 1 ist schematisch ein Dreieckslenker 20 für die Lagerung einer Achse dargestellt, wobei die beiden freien Schenkelenden 21, 22 an der Karosserie bzw. einem Fahrzeugrahmen angelenkt sind und der Scheitel 23 des Dreieckslenkers 20 als achsseitiger Befestigungspunkt ausgeführt ist. Am Befestigungspunkt 23 wird das elastische Gelenk nach der folgenden Ausführungsform bevorzugt verwendet. Das Gelenk soll dabei eine relativ starre Verbindung in Fahrtrichtung (Pfeile 24) und eine weichere Anbindung in Fahrzeugquerrichtung (Pfeile 25) herstellen. Zudem muß das Lager die in der Ebene 26 erfolgenden Schwenkbewegungen (der Befestigungspunkt 23 wandert dabei aus der Zeichenebene heraus und in diese hinein) bei hoher Dauerfestigkeit aufnehmen können.

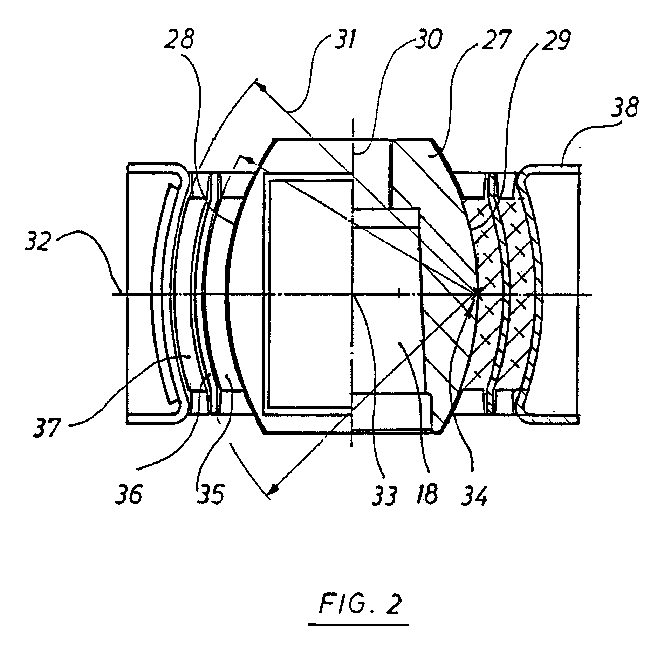

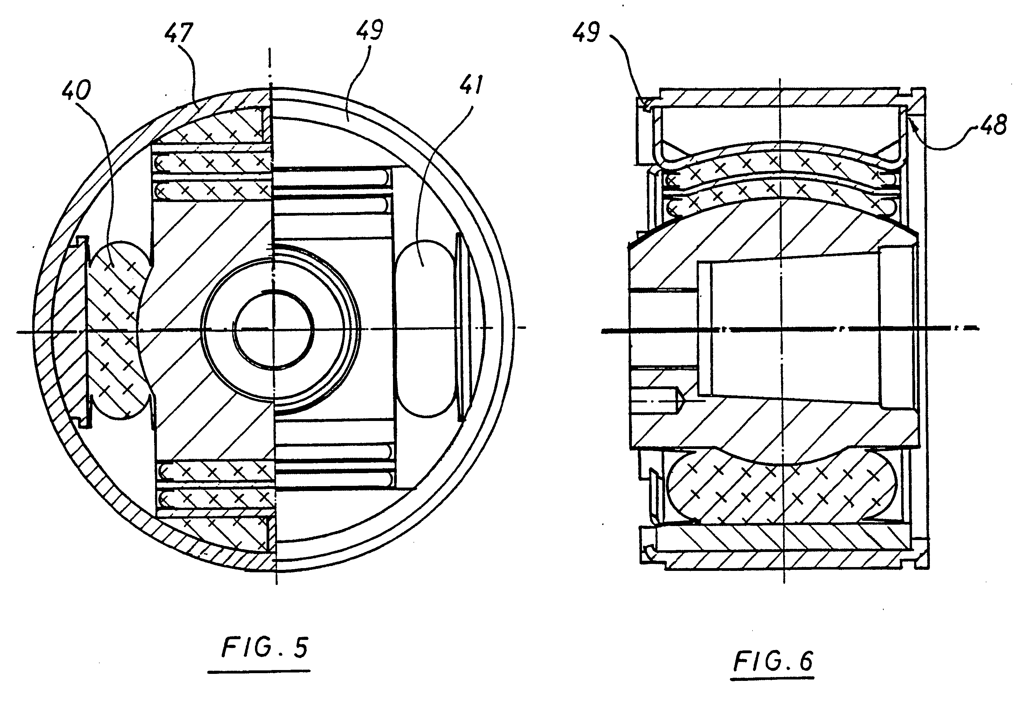

Mit den Fig. 2 bis 6 ist eine dazu eine geeignete Ausführungsform eines Gelenks dargestellt, wobei die Fig. 2 bis 4 Ansichten von Gelenkelementen im nicht eingepreßten Zustand und die Fig. 5 und 6 im eingepreßten Zustand mit zylindrischem Aufnahmeauge zeigen.

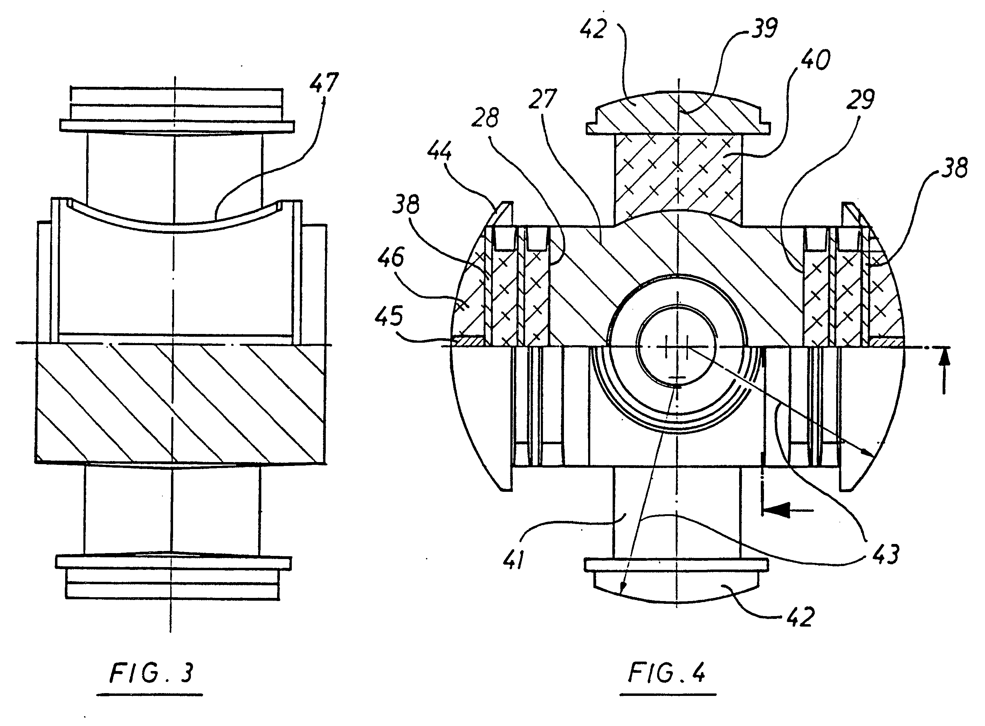

Aus den Fig. 2 und 4 ist besonders die quaderförmige Gestalt eines inneren Metallteils 27 zu erkennen, dessen zwei gegenüberliegende Außenflächen 28, 29 in Richtung der Gelenkachse 30 als Zylinderflächen gekrümmt sind. Die Zylinderachsen, bzw. die Mittelpunkte der Radien 31 im Längsschnitt der Fig. 2 liegen in einer Ebene 32, die quer zur Gelenkachse 30 und durch den Lagermittelpunkt 33 verläuft. Dabei liegen die Zylinderachsen der konzentrisch aufgebauten ersten Gummischicht 35, eines Zwischenblechs 36 und einer zweiten Gummischicht 37 etwa am Punkt 34, d.h. auf der gegenüberliegenden Außenkontur des inneren Metallteils. Ansonsten sind die Außenflächen 28, 29, die Gummischichten 35, 37, das Zwischenblech 36 und die innere Kontur eines äußeren Metallteils 38 parallel zu einer Längsebene 39 ausgerichtet.

In dieser Längsebene 39 liegen zu beiden Seiten des inneren Metallteils je ein Gummipuffer 40, 41 mit einem jeweils äußeren Metallteil 42, das ebenso wie die äußeren Metallteile 38 eine zylindrisch gebogene Außenfläche aufweist. Alle diese zylindrisch gebogenen Außenflächen liegen nach dem Zusammenspannen und Einpressen der Teile in ein zylindrisches Aufnahmeauge auf einer gemeinsamen Zylinderfläche. Diesem Umstand wird dadurch Rechnung getragen, daß, wie in Fig. 6 dargestellt, die Radien 43 im Herstellzustand nicht mit dem Lagermittelpunkt zusammenfallen.

Das äußere Metallteil stützt sich am Aufnahmeauge im wesentlichen mit dem metallischen Außenbereich 44 und einem mittleren Steg 45 an einem äußeren Aufnahmeauge ab. Die Gummiausfüllung 46 dient im wesentlichen der Anpassung an eine Zylinderfläche des Aufnahmeauges.

Aus Fig. 3 ist insbesondere die Kontur 47 zu ersehen, die die Schnittlinie der Durchdringung der zylindrischen Krümmungsflächen quer zur Lagerachse mit den zylindrischen Krümmungsflächen für das Aufnahmeauge darstellt.

In Fig. 5 ist das elastische Gelenk einschließlich eines zylindrischen Aufnahmeauges 47 im fertigmontierten Zustand gezeigt. Die Gummiteile der Gummipuffer 40, 41 sind zusammengepreßt und aufgewölbt, wobei sich die dort angebrachten Metallteile nach außen am zylindrischen Aufnahmeauge 47 abstützen. Ähnlich sind auch die Gummischichten 35, 37 zusammengepreßt und vorgespannt und seitlich ausgewölbt. Beim Einpressen des inneren Gelenkteiles wird dieses mit dem äußeren Metallteil bis an einen Vorsprung 48 eingeschoben. Als Sicherung gegen ein Herausziehen wird ein oberer Rand 49 des Aufnahmeauges 47 umgebördelt.

## Ansprüche

1. Elastisches Gelenk, insbesondere zur Befestigung einer Achse an einem Dreieckslenker (20), der seinerseits mit dem Rahmen eines Lastkraftwagens verbunden ist,
    mit einem inneren Metallteil (27) zur Krafteinleitung,
    mit zwei, am inneren Metallteil (27) gegenüberliegend angeordneten, äußeren Metallteilen (38) zur Kraftausleitung und
    mit wenigstens je einer zwischen dem inneren Metallteil (27) und den äußeren Metallteilen (38) festhaftend einvulkanisierten Gummischicht (35, 37), wobei

die äußeren Metallteile (38) unter radialer Vorspannung in ein Aufnahmeauge (47) mit symmetrischem Querschnitt und einer auf dem Querschnitt senkrecht stehenden Gelenkachse (30) einpreßbar sind und bezüglich der Gelenkachse gegenüberliegen und

die Außenflächen (28, 29) des inneren Metallteils (27) und die entsprechenden damit über die Gummischichten (35, 37) verbundenen Innenflächen der beiden äußeren Metallteile (38) bzw. die Gummischichten (35, 37) in der Richtung und symmetrisch zu einer Mittenlängsebene durch die Gelenkachse (30) verlaufen, dadurch gekennzeichnet, daß diese Außenflächen (28, 29) des inneren Metallteils (27) und die entsprechenden Innenflächen der äußeren Metallteile (38) bzw. die Gummischichten (35, 37) nach außen zum Aufnahmeauge (47) hin gewölbt sind in der Weise, daß diese Außenflächen und Innenflächen konzentrisch liegende Zylinderteilflächen von Zylinderbögen sind mit jeweils einer gemeinsamen Zylinderachse (34), die quer und in einer Richtung zum jeweils gegenüberliegenden Metallteil (38) hin versetzt zur Gelenkachse (30) liegt.

2. Elastisches Gelenk nach Anspruch 1, dadurch gekennzeichnet, daß die Außenflächen (44, 45, 46) der äußeren Metallteile (38) als Zylinderteilflächen mit einer Zylinderachse in Richtung der Gelenkachse (33) durch Metallmaterial und/oder Gummimaterial zum Einpressen unter Vorspannung in ein entsprechendes zylindrisches Aufnahmeauge (47) geformt sind.

3. Elastisches Gelenk nach Anspruch 1 oder 2, dadurch gekennzeichnet, daß in Querrichtung zu den gegenüberliegenden beiden äußeren Metallteilen (38) je ein Gummipuffer (40, 41) am inneren Metallteil (27) angehaftet ist.

4. Elastisches Gelenk nach Anspruch 3, dadurch gekennzeichnet, daß an der Außenseite des Gummipuffers (40, 41) ein Metallteil (42) angehaftet ist mit einer Außenkontur entsprechend der Innenkontur des Aufnahmeauges (47).

5. Elastisches Gelenk nach einem der Ansprüche 1 bis 4, dadurch gekennzeichnet, daß die gekrümmten Gelenkflächen (28, 29) bei einem Einbau des Gelenks in einer Achshalterung (Dreieckslenker 20) in Fahrtrichtung (Pfeile 24) bzw. die Gummipuffer (40, 41) in Fahrzeugquerrichtung (Pfeile 25) liegen.

6. Elastisches Gelenk nach einem der Ansprüche 1 bis 5, dadurch gekennzeichnet, daß der Krümmungsradius (31) für die gewölbten Außen- und Innenflächen so groß gewählt wird, daß sich bei einer Verdrehung der Gelenksteile zueinander um maximal +/−30° in einer Längsebene (26), in der die gegenüberliegenden, äußeren Metallteile (38) liegen, eine maximale Verformung der dazwischenliegenden Gummischichten (35, 37) in deren Randbereichen um maximal 50% ergibt.

7. Elastisches Gelenk nach einem der Ansprüche 1 bis 6, dadurch gekennzeichnet, daß die Zylinderachse (34) auf der entsprechend gegenüberliegenden Außenfläche des inneren Metallteils (27) liegt.

8. Elastisches Gelenk nach einem der Ansprüche 1 bis 7, dadurch gekennzeichnet, daß die Gummischichten (35, 37) entsprechend den Krümmungen konzentrisch geformte Zwischenbleche (36) enthalten.

9. Elastisches Gelenk nach einem der Ansprüche 1 bis 8, dadurch gekennzeichnet, daß das innere Metallteil (27) eine bevorzugt konisch geformte Bohrung (18) entlang der Gelenkachse (30) zum Aufsetzen auf einen senkrecht stehenden Bolzen enthält.

10. Elastisches Gelenk nach einem der Ansprüche 1 bis 9, dadurch gekennzeichnet, daß die äußeren Metallteile (38) im senkrecht stehenden Aufnahmeauge (47) durch Umbördeln dessen oberen Randes (49) gesichert sind und daß an den äußeren Metallelementen Gummiauflagen zur Erhöhung der Reibung angebracht sind.

## Claims

1. An elastic joint, in particular for mounting an axle on a wishbone (20) that is in turn connected to the frame of a lorry,
with an inner metal component (27) for the introduction of the force,
with two outer metal components (38) arranged opposite each other on the inner metal component (27), for the transfer of the force and
with at least one rubber layer (35, 37) each, inserted by vulcanization for firm adhesion between the inner metal component (27) and the outer metal components (38), wherein
the outer metal components (38) can be pressed in with radial prestressing into a receiving opening (47) with a symmetrical cross section and with a joint axis (30) disposed perpendicular to the cross section, and are opposed to each other relative to the joint axis and
the outer surfaces (28, 29) of the inner metal component (27) and the corresponding inner surfaces of the two outer metal components (38) or the rubber layers (35, 37) connected thereto via the rubber layers (35, 37) extend in the direction of, and symmetrically relative to, a median longitudinal plane through the joint axis (30),
characterized in that these outer surfaces (28, 29) of the inner metal component (27) and the corresponding inner surfaces of the outer metal components (38) or the rubber layers (35, 37) are curved towards the outside to the receiving opening (47), in such a way that these outer and inner surfaces are concentrically disposed cylindrical part surfaces of cylindrical arcs with a respective common cylinder axis (34) that is disposed transversely to the joint axis (30) and in a direction offset towards the respective opposite metal component (38).

2. An elastic joint according to claim 1, characterized in that the outer surfaces (44, 45, 46) of the outer metal components (38) are formed as cylindrical part surfaces with a cylinder axis in the direction of the joint axis (33) made of metal and (or rubber material for being pressed in with prestressing into a corresponding cylindrical receiving opening (47).

3. An elastic joint according to claim 1 or 2, characterized in that one rubber buffer (40, 41) each is attached to the inner metal component (27) in the transverse direction to the opposed two outer metal components (38).

4. An elastic joint according to claim 3, characterized in that a metal component (42) is attached to the outer side of the rubber buffer (40, 41) with an outer contour corresponding to the inner contour of the receiving opening (47).

5. An elastic joint according to one of claims 1 to 4, characterized in that, on installation of the joint into an axle mounting (wishbone 20), the curved joint surfaces (28, 29) are disposed in the direction of travel (arrows 24) and the rubber buffers (40, 41) in the transverse direction of the vehicle (arrows 25).

6. An elastic joint according to one of claims 1 to 5, characterized in that the radius of curvature (31) of the curved outer and inner surfaces is chosen to be so large that with a maximum rotation of +/−30° of the joint components relative to each other in a longitudinal plane (26) wherein the opposed outer metal components (38) are disposed, there ensues a maximum deformation of the interposed rubber layers (35, 37) of 50% in their border zones.

7. An elastic joint according to one of claims 1 to 6, characterized in that the cylinder axis (34) is disposed on the corresponding opposed outer surface of the inner metal component (27).

8. An elastic joint according to one of claims 1 to 7, characterized in that the rubber layers (35, 37) contain concentric intermediate metal plates (36) shaped in accordance with the curvatures

9. An elastic joint according to one of claims 1 to 8, characterized in that the inner metal component (27) comprises a preferably conical bore (18) along the joint axis (30) for insertion of a vertical pin.

10. An elastic joint according to one of claims 1 to 9, characterized in that the outer metal components (38) are secured in the vertical receiving opening (47) by flanging its upper edge (49), and in that rubber layers are attached to the outer metal elements in order to increase friction.

## Revendications

1. Articulation élastique, en particulier pour la fixation d'un essieu à un levier triangulé (20) qui est raccordé de son côté du châssis d'un camion, comportant

une pièce métallique intérieure (27) pour l'entrée des forces,

deux pièces métalliques extérieures (38), disposées en face l'une de l'autre sur la pièce métallique intérieure (27), pour la sortie des forces, et

au moins une couche de caoutchouc (35, 37) fixée par vulcanisation entre la pièce métallique intérieure (27) et chacune des pièces métalliques extérieures (38),

les pièces métalliques extérieures (38) pouvant être insérées à la presse, avec précontrainte radiale, dans un anneau de logement (47) avec une section transversale symétrique et un axe d'articulation (30) perpendiculaire à la section transversale et étant opposées par rapport à l'axe d'articulation, et

les surfaces externes (28, 29) de la pièce métallique intérieure (27) et les surfaces internes correspondantes des deux pièces métalliques extérieures (38), unies à ces surfaces externes par les couches de caoutchouc (35, 37), ou les couches de caoutchouc (35, 37) s'étendant dans la direction d'un plan longitudinal médian passant par l'axe d'articulation et symétriquement par rapport à ce plan,

caractérisé en ce que les surfaces externes (28, 29) de la pièce métallique intérieure (27) et les surfaces internes correspondantes des pièces metalliques extérieures (38) ou les couches de caoutchouc (35, 37) sont convexes vers l'extérieur en direction de l'anneau de logement (47), de telle manière que les surfaces externes et surfaces internes sont des surfaces cylindriques partielles concentriques d'arcs cylindriques ayant respectivement un axe de cylindre commun (34) qui est perpendiculaire à l'axe d'articulation (30) et décalé par rapport à celui-ci en direction de la pièce métallique (38) respectivement opposée.

2. Articulation élastique selon la revendication 1, caractérisée en ce que les surfaces externes (44, 45, 46) des pièces métalliques extérieures (38) sont formées comme des surfaces cylindriques partielles ayant un axe de cylindre dans la direction de l'axe d'articulation (33), par de la matière métallique et/ou de la matière caoutchouteuse, en vue de l'insertion à la presse sous précontrainte dans un anneau de logement cylindrique correspondant.

3. Articulation élastique selon la revendication 1 ou 2, caractérisée en ce qu'en direction transversale par rapport aux deux pièces métalliques extérieures opposées (38), un tampon en caoutchouc (40, 41) est collé de chaque côté à la pièce métallique intérieure (27).

4. Articulation élastique selon la revendication 3, caractérisée en ce qu'il est collé, au côté extérieur du tampon en caoutchouc (40, 41), une pièce métallique (42) dont le contour extérieur correspond au contour intérieur de l'anneau de logement (47).

5. Articulation élastique selon l'une quelconque des revendications 1 à 4, caractérisée en ce que lorsque l'articulation est montée dans un support d'essieu (levier triangulé 20), les surfaces convexes (28, 23) de l'articulation sont situées dans la direction de marche (flèche 24) ou les tampons en caoutchouc (40, 41) sont situés dans la direction transversale du vehicule (flèche 25).

6. Articulation élastique selon l'une quelconque des revendications 1 à 5, caractérisée en ce que le rayon de courbure (31) pour les surfaces externes et internes convexes est choisi suffisamment grand pour qu'en cas de torsion des pièces de l'articulation les unes par rapport aux autres de +/−30° au maximum dans un plan longitudinal (26) dans lequel sont situées les pièces métalliques extérieures opposées (38), il en résulte une déformation maximale des couches de caoutchouc intermédiaire (35, 37) de 50% au maximum dans les régions des bords de celle-ci.

7. Articulation élastique selon l'une quelconque des revendications 1 à 6, caractérisée en ce que l'axe de cylindre (34) est situé sur la surface externe opposée correspondante de la pièce métallique intérieure (27).

8. Articulation élastique selon l'une quelconque des revendications 1 à 7, caractérisée en ce que les couches de caoutchouc (35, 37) contiennent des tôles intermédiaires (36) de forme concentrique correspondante aux courbures.

9. Articulation élastique selon l'une quelconque des revendications 1 à 8 caractérisée en ce que la pièce métallique intérieure (27) contient une forure (18) ayant de préférence une forme conique le long de l'axe d'articulation (30), pour son emmanchement sur un boulon vertical.

10. Articulation élastique selon l'une quelconque des revendications 1 à 9, caractérisée en ce que les pièces métalliques extérieures (38) sont assujetties dans l'anneau de réception vertical par rabattement du bord supérieur (49) de celui-ci, et en ce que des appuis en caoutchouc sont disposés sur les éléments métalliques extérieurs afin d'accroître le frottement.

FIG. 1

FIG. 2

FIG. 4

FIG. 3

FIG. 6

FIG. 5